# EUROPÄISCHE PATENTSCHRIFT

(11) **EP 1 853 477 B1**
(45) Veröffentlichungstag und Bekanntmachung des Hinweises auf die Patenterteilung: **10.09.2008**
(21) Anmeldenummer: 06706810.6
(22) Anmeldetag: 10.02.2006
(51) Int. Cl.: B62D 6/00

(54) **STABILISIERUNGSVORRICHTUNG UND VERFAHREN ZUR FAHRSTABILISIERUNG EINES FAHRZEUGS ANHAND EINES SEITENKRAFBEIWERTS**
STABILISING SYSTEM AND METHOD FOR DIRECTIONALLY STABILISING A MOTOR VEHICLE BY MEANS OF A LATERAL FORCE FACTOR
SYSTEME DE STABILISATION ET PROCEDE DE STABILISATION DIRECTIONNELLE D'UN VEHICULE AU MOYEN D'UN COEFFICIENT DE FORCE LATERALE

(30) Priorität: 16.02.2005 DE 102005007213; 04.08.2005 DE 102005036708
(43) Veröffentlichungstag der Anmeldung: 14.11.2007
(73) Patentinhaber: KNORR-BREMSE SYSTEME FÜR NUTZFAHRZEUGE GMBH, 80809 München (DE)
(72) Erfinder: HOLZMANN, Frédéric, 93073 Neutraubling (DE); KOLESZAR, Peter, H-1149 Budapest (HU); MAISCH, Ansgar, 76275 Ettlingen (DE); PAASCHE, Sascha, Meguro-Ku, 150-0003 Tokyo (JP); SCHWARZHAUPT, Andreas, 76829 Landau (DE); SPIEGELBERG, Gernot, 71296 Heimsheim (DE); SULZMANN, Armin, 69115 Heidelberg (DE); TRECSENI, Balazs, 70329 Stuttgart (DE)
(74) Vertreter: Schönmann, Kurt
(86) Internationale Anmeldenummer: PCT/EP2006/001180
(87) Internationale Veröffentlichungsnummer: WO 2006/087141

(56) Entgegenhaltungen:
- EP-A- 0 487 967
- EP-A- 1 225 109
- DE-A1- 4 200 061
- DE-A1- 4 222 958
- DE-A1- 4 305 155
- DE-A1- 10 303 154
- PATENT ABSTRACTS OF JAPAN Bd. 2000, Nr. 17, 5. Juni 2001 (2001-06-05) -& JP 09 290766 A (DAIMLER BENZ AG), 11. November 1997 (1997-11-11)

## Beschreibung

Die Erfindung betrifft eine Stabilisierungsvorrichtung und ein Verfahren zur Fahrstabilisierung eines Fahrzeugs, mit Lenkmitteln zur Beeinflussung eines Lenkwinkels gelenkter Räder des Fahrzeugs, und mit Stabilisierungsmitteln, die die Lenkmittel zur Fahrstabilisierung des Fahrzeugs steuern.

Eine derartige Stabilisierungsvorrichtung ist beispielsweise in der DE 103 03 154 A1 oder der EP 1 225 109 A2 beschrieben. Ein instabiles Fahrzeugverhalten oder ein erwartetes instabiles Fahrverhalten wird bei der bekannten Stabilisierungsvorrichtung durch Veränderung des Lenkwinkels derart korrigiert, dass der Fahrer beim Lenken des Fahrzeugs in Richtung eines untersteuernden Fahrzeugskurses unterstützt wird.

Aus der EP 0 487 967 A2 ist ein Fahrzeug mit einem Antiblockierregler bekannt, bei dem bei einer Hinterradlenkung ein Kompensationslenkwinkel überlagert wird, um ein durch eine Bremsung verursachtes Giermoment zu kompensieren. Ein solches Giermoment entsteht beispielsweise, wenn das Fahrzeug auf einer Fahrbahn mit unterschiedlicher Griffigkeit (µ-split) abgebremst wird.

Es können aber auch andere Fahrsituationen auftreten, bei denen ein aktiver Lenkeingriff zwar zweckmäßig, jedoch nur schwer zu realisieren ist. Beispielsweise wenn ein Fahrzeug bei einer Kurvenfahrt übersteuert oder untersteuert. Problematisch ist aber stets, dass bekannte Systeme reaktiv sind und erst dann Maßnahmen zur Stabilisierung des Fahrzeugs vornehmen, wenn dieses bereits instabil ist.

Es ist daher Aufgabe der vorliegenden Erfindung, eine Stabilisierungsvorrichtung und ein Verfahren der eingangs genannten Art derart weiterzubilden, dass eine verbesserte Fahrstabilisierung auf Grundlage eines Lenkeingriffs ermöglicht wird. Insbesondere soll ein prädiktiver Lenkeingriff möglich gemacht werden, der instabile Fahrzustände des Fahrzeugs im Idealfall bereits vor deren Entstehen, zumindest aber so frühzeitig wie möglich kompensiert.

Diese Aufgabe wird durch eine Stabilisierungsvorrichtung der eingangs genannten Art gelöst, bei der die Stabilisierungsmittel die Lenkmittel in Abhängigkeit eines Seitenkraftbeiwerts mindestens eines der gelenkten Räder zur Einstellung eines das Fahrzeug stabilisierenden Lenkwinkels ansteuern, wobei die Stabilisierungsmittel einen Schräglaufwinkel der gelenkten Räder derart einstellen, dass der Seitenkraftbeiwert den Bereich seines Maximums im wesentlichen nicht überschreitet. Ferner sind ein erfindungsgemäßes Verfahren sowie ein Fahrzeug mit einer erfindungsgemäßen Stabilisierungsvorrichtung zur Lösung der Aufgabe vorgesehen.

Ein Grundgedanke der Erfindung ist, anhand eines Seitenkraftbeiwerts die maximal erzielbare Seitenkraft eines gelenkten Rads, zweckmäßigerweise beider gelenkten Räder bei einem Fahrzeug mit Vorderachslenkung oder aller gelenkten Räder bei einem Fahrzeug mit Zweiachslenkung, auszuwerten und bei der Ermittlung eines optimalen einzustellenden Lenkwinkels zu berücksichtigen. Die Stabilisierungsvorrichtung stellt den Lenkwinkel derart ein, dass die gelenkten Räder möglichst maximale Seitenkräfte übertragen können. Wenn das Fahrzeug beispielsweise auf einem Untergrund mit geringer Griffigkeit fährt, stellt die erfindungsgemäße Stabilisierungsvorrichtung einen geringeren Lenkwinkel ein als bei einem Untergrund mit höherer Griffigkeit bzw. höherem Seitenkraftbeiwert. Die Stabilisierungsvorrichtung ermittelt z.B. anhand eines µ_{quer}-Schräglaufwinkeldiagramms und/oder eines µ_{quer}-Querschlupfdiagramms einen Seitenkraftbeiwert µ_{quer} und daraus in einem nächsten Schritt die maximal einstellbare Seitenkraft, die das gelenkte Rad auf die Fahrbahn zu übertragen vermag. Die maximal einstellbare Seitenkraft bildet dann sozusagen die Obergrenze für den einzustellenden Lenkwinkel.

Die erfindungsgemäße Stabilisierungsvorrichtung kann hierbei hardware- und/oder softwaremäßig realisiert sein.

Zweckmäßigerweise berücksichtigt die erfindungsgemäße Stabilisierungsvorrichtung zusätzlich bei der Ermittlung des Schräglaufwinkels den Längsreibungsbeiwert des mindestens einen gelenkten Rads, vorteilhafterweise aller gelenkten Räder. Auf diese Weise wird zugleich eine optimale Regelung der Längsdynamik des Fahrzeugs gewährleistet. Besonders zweckmäßig ist es, wenn die Stabilisierungsmittel den optimalen Lenkwinkel für das jeweilige Rad anhand einer vektoriellen Addition von Längs- und Seitenkraft des jeweiligen gelenkten Rads in der Art des Kammschen Kreises ermitteln, um einen Maximalbereich der erzielbaren Längskraft und der erzielbaren Seitenkraft zu bestimmen. Das Rad kann in diesem Fall in optimaler Weise Längskraft und Seitenkraft auf die Fahrbahn übertragen, was sowohl beim Beschleunigen als auch beim Bremsen von erheblichem Vorteil ist. In diesem Fall lässt sich das Fahrzeug besonders sicher in einen stabilen Fahrzustand überführen, da in optimaler Weise die Bremskraft auf die Fahrbahn übertragen werden kann und zugleich durch die erfindungsgemäße Lenkwinkelkorrektur das Fahrzeug auf einem durch den Fahrer gewünschten Kurs gehalten wird.

Vorzugsweise wertet die erfindungsgemäße Stabilisierungsvorrichtung einen "erweiterten" Kammschen Kreis bei der Ermittlung des optimalen einzustellenden Lenkwinkels aus. Dieser vorzugsweise dreidimensionale Kammsche Kreis, der auch als Kuchendiagramm bezeichnet werden könnte, enthält weitere Diagramme für den Längsreibungsbeiwert und den Seitenkraftbeiwert eines jeweils gelenkten Rads, insbesondere in Abhängigkeit des jeweiligen Schlupfs und Schräglaufwinkels des Rads.

Beispielhaft werden nachfolgend einige Fahrsituationen vorgestellt, in denen sich die erfindungsgemäße Stabilisierungsvorrichtung als zweckmäßig erweist:
Beispielsweise bewirkt die Stabilisierungsvorrichtung bei einem Übersteuern des Fahrzeugs einen Lenkwinkel, der ein Untersteuern des Fahrzeuges einleitet. Auch der umgekehrte Fall ist zweckmäßig, bei dem die Stabilisierungsvorrichtung einem Untersteuern durch einen Lenkwinkel in Richtung eines Übersteuerns entgegenwirkt. Bei der jeweiligen Einstellung des Lenkwinkels berücksichtigt die Stabilisierungsvorrichtung zweckmäßigerweise den jeweiligen Seitenkraftbeiwert als auch den Längsreibungsbeiwert des gelenkten Rads. Besonders zweckmäßig ist es, wenn die Stabilisierungsvorrichtung zunächst ein Abbremsen eines der Räder bewirkt, um ein Übersteuern einzuleiten, um dann anschließend durch geeigneten Lenkeingriff in Richtung eines Untersteuerns in das Fahrzeug stabilisierend einzugreifen.
Besonders zweckmäßig ist eine Kombination der erfindungsgemä-. ßen Stabilisierungsvorrichtung mit einem Antiblockiersystem (ABS). Beispielsweise kann die Stabilisierungsvorrichtung eine Antiblockierregelung enthalten oder mit einer Antiblockierregelung zusammenwirken. Die Stabilisierungsvorrichtung erhält von der Antiblockierregelung an den Rädern des Fahrzeugs eingestellte Bremswerte, beispielsweise Werte über den Bremsdruck und/oder über eine Bremsleistung eines Rads oder dergleichen. Die Bremswerte sind vorteilhaft Sollwerte und/oder Istwerte der an den Bremsen der jeweiligen Räder einzustellenden oder eingestellten Bremswerte.
   Die Stabilisierungsvorrichtung analysiert die Bremswerte und/oder eine Relation von Bremswerten, die an Räder einer Achse des Fahrzeugs in Abhängigkeit des jeweiligen Reibwerts des Rads eingestellt sind. Beispielsweise regelt ein mehrkanaliges Antiblockiersystem individuell die Bremswerte der Räder des Fahrzeugs aus. Üblicherweise ermittelt das Antiblockiersystem individuell für jedes Rad der gelenkten Vorderachse sowie vorteilhafterweise für jedes Rad der Hinterachse jeweils einen Bremswert. Ein solches Antiblockiersystem wird auch als MIR-Antiblockiersystem (MIR = Modifizierte Individual-Regelung) bezeichnet. Es können auch beide Räder der Hinterachse durch einen einzigen Bremswertregelungskanal des Antiblockiersystems geregelt werden. Wenn das Fahrzeug auf einem Untergrund mit unterschiedlichem Griff fährt, eine sogenannte µ-Split-Situation vorliegt, regelt das Antiblockiersystem die Bremswerte der Räder in Abhängigkeit des jeweiligen Reibwerts des Rads bezogen auf den jeweils unterschiedlich griffigen Untergrund, auf dem sich das Rad bewegt. Das Rad auf dem Fahrbahnbereich mit der besseren Haftung bzw. Reibung wird somit stärker gebremst als das Rad auf dem Fahrbahnbereich mit der schlechteren Reibung bzw. Haftung, insbesondere der schlechteren Längsreibung. Dies führt zu einer Gierbewegung des Fahrzeugs. Die erfindungsgemäße Stabilisierungsvorrichtung wirkt dieser Gierbewegung entgegen, indem sie den Lenkwinkel entsprechend korrigiert. Dabei wertet die Stabilisierungsvorrichtung zweckmäßigerweise die jeweiligen Bremswertverläufe der beiden auf unterschiedlichem Untergrund fahrenden Räder aus. Zweckmäßigerweise ist das Regelungsmodell des Antiblockiersystems in der erfindungsgemäßen Stabilisierungsvorrichtung hinterlegt, beispielsweise in Gestalt eines abgespeicherten Programmcodes. Alternativ ist dieses am Antiblockiersystem abrufbar, so dass die Stabilisierungsvorrichtung sozusagen prädiktiv im voraus erkennt, welcher Bremseffekt durch das Antiblockiersystem bewirkt wird, um das Fahrzeug durch entsprechendes Gegenlenken zu stabilisieren, noch bevor die unerwünschte Gierbewegung einsetzt. Ein Lenkeingriff von Seiten des Fahrers ist nicht erforderlich. Der Fahrer kann an der Lenkhandhabe, beispielsweise dem Lenkrad, einen Lenkwinkel einstellen, der der gewünschten Fahrtrichtung entspricht. Die erfindungsgemäße Stabilisierungsvorrichtung korrigiert automatisch durch eine überlagerte oder kompensierende Lenkwinkeleinstellung die durch das Antiblockiersystem verursachte unerwünschte Drehbewegung.
Besonders vorteilhaft ist es, wenn die Stabilisierungsvorrichtung einen oder mehrere Begrenzungswerte an die Blockierregelung ausgibt, damit diese den maximal an einem Rad einzustellenden Bremswert ermitteln kann. Die Antiblockierregelung bremst anhand des Begrenzungswerts die Räder des Fahrzeugs nur insoweit ab, dass die Stabilisierungsvorrichtung durch entsprechendes Gegenlenken das Fahrzeug zuverlässig stabilisieren kann. Die Stabilisierungsvorrichtung ermittelt den Begrenzungswert zweckmäßigerweise in Abhängigkeit des Seitenkraftbeiwerts und/oder des Schräglaufwinkels des jeweiligen Rads.
Auch bei einer Fahrsituation, bei der ein Untersteuern auftritt, ist die erfindungsgemäße Stabilisierungsvorrichtung von Vorteil. Beispielsweise schwimmen in einer Aquaplaningsituation die gelenkten Räder des Fahrzeugs auf, so dass das Fahrzeug nicht weiter lenkbar ist. Ein ungeübter Fahrer stellt in einer solchen Situation häufig einen ungeeigneten Lenkwinkel ein, z.B. einen zu großen Lenkwinkel, so dass das Fahrzeug in eine durch den eingestellten Lenkwinkel bewirkte unerwünschte Richtung weiterfährt, wenn die Räder auf der Fahrbahn wieder stärker haften. Die erfindungsgemäße Stabilisierungsvorrichtung stellt in einer solchen Fahrsituation den Lenkwinkel derart ein, dass die gelenkten Räder eine maximale Seitenkraft übertragen können. Bei vollständigem Aquaplaning kann dies beispielsweise bedeuten, dass die Stabilisierungsvorrichtung die Räder in eine der Fahrzeugbewegung entsprechende Richtung stellt, z.B. geradeaus, so dass das Fahrzeug in dieser Richtung weiter fährt, wenn die übertragbare Seitenkraft schnell, insbesondere sprunghaft ansteigt, wenn beispielsweise das Fahrzeug auf einen Fahrbahnbereich gelangt, auf dem kein Aquaplaning auftritt. Somit wird eine unkontrollierbare Reaktion des Fahrzeugs verhindert und das Fahrzeug bleibt fahrstabil.

Nachfolgend wird ein Ausführungsbeispiel der Erfindung anhand der beigefügten Zeichnungen näher erläutert. Dabei zeigen:

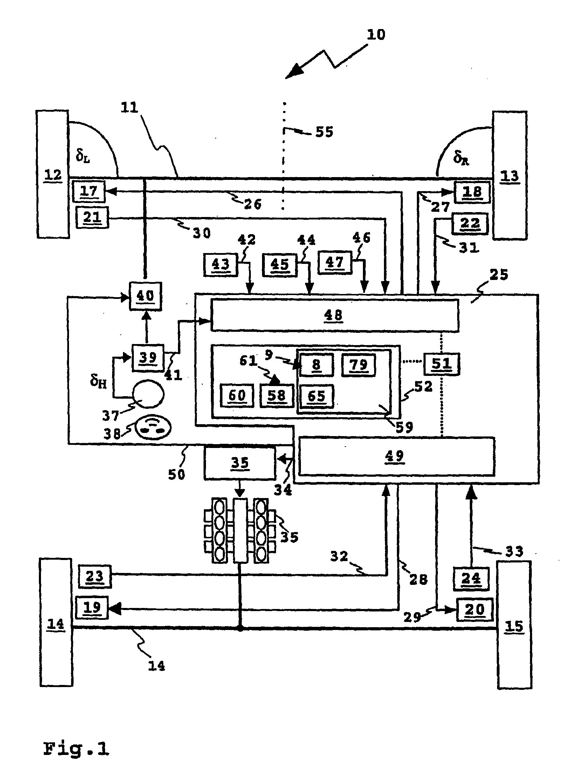

- Fig. 1: ein schematisch dargestelltes Fahrzeug mit einer erfindungsgemäßen Stabilisierungsvorrichtung zur Fahrstabilisierung,
- Fig. 2: das Fahrzeug aus Fig. 1 bei einer Kurvenfahrt, die zu einem übersteuernden Verhalten führt,
- Fig. 3: das Fahrzeug aus Fig. 1 in einer Fahrsituation, in der Aquaplaning auftritt,
- Fig. 4: ein Diagramm mit beispielhaften Verläufen von Seitenkraftbeiwerten und Längsreibungsbeiwerten in Abhängigkeit eines Schlupfs λ bei konstanten Schräglaufwinkeln α₁ und α₂,
- Fig. 5: einen Kammschen Kreis mit zusätzlich eingezeichneten Verläufen von Seitenkraftbeiwert und Längsreibungsbeiwert,
- Fig. 6: das Fahrzeug aus Fig. 1 in einer µ-Split-Fahrsituation,
- Fig. 7: ein Diagramm mit Bremswertverläufen, die ein Antiblockiersystem am Fahrzeug in der Fahrsituation aus Fig. 6 einstellt, und
- Fig. 8: ein Diagramm mit beispielhaften Verläufen von Seitenkraftbeiwerten in Abhängigkeit eines Schräglaufwinkels α.

Bei dem in den Figuren dargestellten Fahrzeug 10 handelt es sich beispielsweise um einen Personenkraftwagen, einen Lastkraftwagen oder einen Lieferwagen.

Das Fahrzeug 10 umfasst eine Vorderachse 11 mit lenkbaren Rädern 12, 13 sowie eine Hinterachse 14 mit nicht lenkbaren Rädern 15, 16. An den Rädern 12, 13, 15, 16 sind Bremsen 17, 18, 19, 20 zum Abbremsen des jeweiligen Rads sowie Drehzahlsensoren 21 bis 24 zum Erfassen der jeweiligen Raddrehzahl des Rads 12, 13, 15, 16 angeordnet.

Die Bremsen 17 bis 20 sind, was durch Pfeile schematisch dargestellt ist, durch eine Stabilisierungsvorrichtung 25 mittels Bremseingriffssignalen 26 bis 29 ansteuerbar.

Die Drehzahlsensoren 21 bis 24 senden Drehzahlmesswerte 30 bis 33 in Form entsprechender Drehzahlsignale, die die Drehzahl des jeweiligen Rads 12, 13, 15, 16 repräsentieren, an die Stabilisierungsvorrichtung 25.

Ferner kann die Stabilisierungsvorrichtung 25 mittels eines Motorsteuersignals 34 eine Motorsteuerung 35 ansteuern, beispielsweise zur Drosselung der Motorleistung eines Motors 35, der beispielsweise die Vorderachse 11 und/oder die Hinterachse 14 des Fahrzeugs 10 antreibt.

An einem Lenkrad 37 oder einer sonstigen Lenkhandhabe kann ein Fahrer 38 Lenkbefehle vorgeben. Beispielsweise erfasst eine Lenkerfassungseinrichtung 39 den jeweiligen Wunschlenkwinkel δₕ und gibt diesen an einen Lenkaktor 40 zum Lenken der Räder 12, 13 weiter. Ferner übermittelt die Lenkerfassungseinrichtung 39 ein Wunschlenkwinkelsignal 41 mit dem Wunschlenkwinkel δₕ an die Stabilisierungsvorrichtung 25.

Der Lenkaktor 40 kann z.B. Bestandteil einer Aktivlenkung und/oder Überlagerungslenkung sein, die ein Drehmoment und/oder einen Winkel dem Wunschlenkwinkel δₕ des Fahrers 38 überlagert. Eine besonders bevorzugte Variante der Erfindung sieht allerdings vor, dass der Lenkaktor 40 unabhängig vom Lenkwunsch des Fahrers 38 einen Lenkwinkel δ einstellen kann und beispielsweise Bestandteil einer sogenannten Steer-by-Wire-Lenkung ist.

Die Stabilisierungsvorrichtung 25 stabilisiert das Fahrzeug 10 durch Bremseingriffe und/oder den Motor 35 steuernde Eingriffe und/oder Lenkeingriffe, z.B. wenn das Fahrzeug 10 umzukippen, zu schleudern oder in sonstiger Weise fahrinstabil zu werden droht.

Die Stabilisierungsvorrichtung 25 wertet vorzugsweise zur Fahrstabilisierung des Fahrzeugs 10 ohnehin erforderliche Sensorsignale aus, die beispielsweise die Drehzahlsensoren 21 bis 24 in Form der Drehzahlwerte der Räder 12, 13, 15, 16 liefern.

Ferner wertet die Stabilisierungsvorrichtung 25 zweckmäßigerweise ein Gierratensignal 42 mit einer Gierrate Ψ eines Giersensors 43 und/oder ein Querbeschleunigungssignal 44 mit einem Querbeschleunigungswert a_{y} eines zur Fahrzeuglängsachse 55 quer eingebauten Querbeschleunigungssensors 45 und/oder ein Fahrgeschwindigkeitssignal 46 mit der Fahrgeschwindigkeit v des Fahrzeugs 10 aus, das eine Fahrgeschwindigkeitseinrichtung 47 ermittelt. Das Fahrgeschwindigkeitssignal 46 wird von der Fahrgeschwindigkeitseinrichtung 47 z.B. anhand der Drehzahlwerte der Räder 12, 13, 15, 16 ermittelt.

Die Stabilisierungsvorrichtung 25 ist vorliegend als ein Modul realisiert, das sowohl Hardware auch als Software enthält. Beispielsweise sind Ein- und Ausgabemittel 48, 49 vorhanden, die die vorgenannten Signale der Sensoren 21 bis 24, 43, 45, 47, 54 erfassen und entsprechende Steuersignale, beispielsweise das Motorsteuersignal 34, die Bremseingriffssignale 26 bis 29 sowie ein Lenksignal 50 zur Ansteuerung des Lenkaktors 40 erzeugen. Die Ein- und Ausgabemittel 48, 49 enthalten beispielsweise einen oder mehrere Buscontroller und/oder digitale und/oder analoge Eingabemittel und/oder Ausgabemittel. Die Stabilisierungsvorrichtung 25 enthält ferner einen Prozessor oder mehrere Prozessoren 51, die einen von Programmmodulen jeweils bereitgestellten Programmcode ausführen, der in einem Speicher 52 mit z.B. flüchtigem und/oder nicht-flüchtigem Speicher abgelegt ist. Die Programmmodule enthalten beispielsweise ein Antiblockier-Modul 58 sowie ein ESP-Modul 59 (ESP = Elektronisches Stabilisierungs-Programm) und vorteilhaft ein ASR-Modul 60 (ASR = Antriebsschlupfregelung). Die Module 58, 59, 60 bilden Stabilisierungsmittel 61.

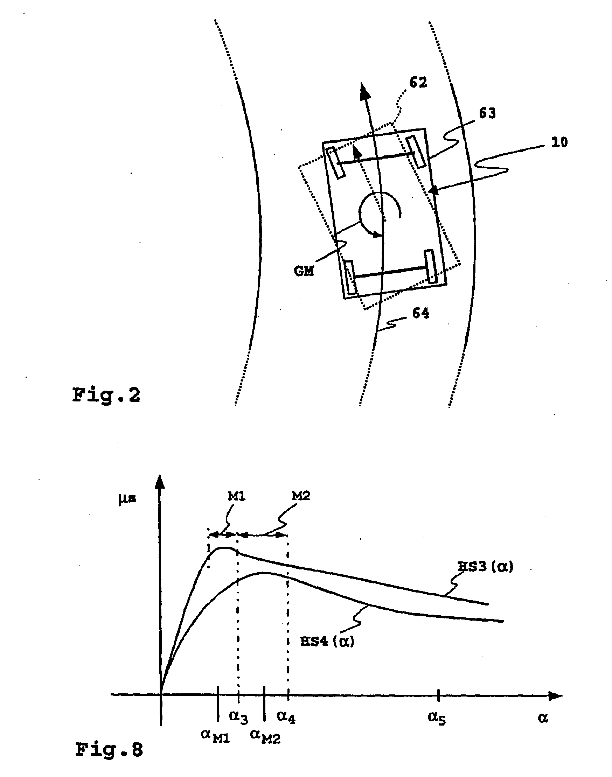

Das erfindungsgemäß ausgestaltete ESP-Modul 59 und das ABS-Modul 58 arbeiten folgendermaßen:
Bei einer Kurvenfahrt gemäß Fig. 2 würde das Fahrzeug 10 mit konventioneller Technik unter Umständen übersteuern und eine übersteuernde Fahrzeugstellung 62 einnehmen, bei der das Heck des Fahrzeugs 10 ausbricht, d.h. zur Kurvenaußenseite ausschwenkt. Das ESP-Modul 59 beeinflusst jedoch mit Hilfe des Lenkwinkelsignals 50, das eine Lenkfunktion 8 erzeugt, den Lenkaktor 40 prädiktiv oder zumindest frühzeitig reaktiv, damit das Fahrzeug zumindest im wesentlichen nicht übersteuert und in der mit durchgezogenen Linien gezeigten Fahrstellung 63 die vom Fahrer 38 am Lenkrad 37 eingestellte Kurvenbahn 64 durchfährt. Der Lenkaktor 40 und die Lenkfunktion 8 bilden Lenkmittel 9.
Das ESP-Modul 59 generiert das Lenksignal 50 zur Ansteuerung des Lenkaktors 40 anhand des Lenkwinkelsignals 41, des Fahrgeschwindigkeitssignals 46, des Gierratensignals 42 und des Querbeschleunigungssignals 44. Die in diesen Signalen enthaltenen Werte gehen in ein Regelungsmodell 65 des ESP-Moduls 59 ein, das sowohl die Längsdynamik als auch die Querdynamik des Fahrzeugs 10 repräsentiert.

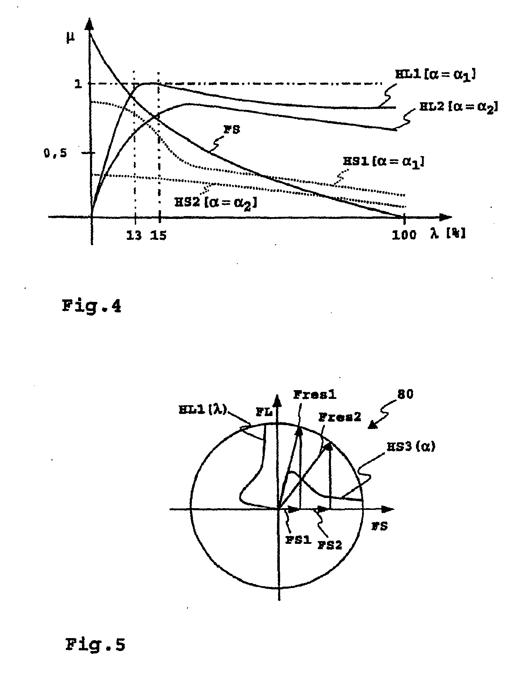

Zur Bestimmung des Lenkwinkels δ oder individuell an den Rädern 12, 13 einzustellender Lenkwinkel δ_{L} und δ_{R} wertet das ESP-Modul 59 zudem erfindungsgemäß einen Seitenkraftbeiwert µₛ der gelenkten Räder 12, 13 aus. Ferner berücksichtigt das ESP-Modul 59 einen Längsreibungsbeiwert µ_{L}, um so einen optimalen Lenkwinkel δ der gelenkten Räder 12, 13 zu ermitteln. Beispielsweise analysiert das ESP-Modul 59 dazu von einem Schlupf λ abhängige Seitenkraftbeiwertverläufe HS1, HS2 bei konstanten Schräglaufwinkeln α₁ und α₂ gemäß Fig. 4 und/oder von einem Schräglaufwinkel α abhängige Seitenkraftbeiwertverläufe HS3, HS4 gemäß Fig. 8, sowie weitere, in Fig. 4 und Fig. 8 nicht dargestellte Seitenkraftbeiwertverläufe. Ferner analysiert das ESP-Modul 59 zweckmäßigerweise Längsreibungsbeiwertverläufe HL1, HL2.

Bei dem Schräglaufwinkel α handelt es sich um den Winkel zwischen der Radmittelebene eines jeweiligen Rads 12, 13 und der momentanen Bewegungsrichtung des Rads 12, 13. Der Schräglaufwinkel α₁ beträgt beispielsweise 2°, der Schräglaufwinkel α₂ beispielsweise 10°. Beispielhaft ist auch der Verlauf einer Seitenführungskraft FS in das Diagramm der Fig: 4 eingezeichnet. Der Schräglaufwinkel α entspricht einer Seitenschlupfdifferenz zwischen dem eingestellten Lenkwinkel α und der tatsächlichen Fahrtrichtung des Rads 12, 13.

Das ESP-Modul 59 ermittelt nun zunächst anhand eines zu kompensierenden Giermoments GM eine erforderliche Seitenkraft FS, die die gelenkten Räder 12, 13 erbringen müssen, um das Fahrzeug 10 in der Kurvenbahn 64 zu halten oder in die Kurvenbahn 64 zu überführen. Anhand der Seitenkraft FS ermittelt das ESP-Modul 59 sodann einen Schräglaufwinkel α, der an den Rädern 12, 13 einzustellen ist. Das ESP-Modul 59 berücksichtigt dabei einen Verlauf des Seitenkraftbeiwerts µₛ in Abhängigkeit des einzustellenden Schräglaufwinkels α.

Beispielhafte Seitenkraftbeiwertverläufe HS3(α) und HS4(α) sind in Fig. 8 dargestellt. Der Verlauf HS3 entspricht einem höheren Seitenkraftbeiwert µₛ bzw. einer höheren Reibung der Räder 12, 13 auf der Fahrbahn, der Verlauf HS4 einer niedrigeren Reibung und einem niedrigeren Seitenkraftbeiwert µₛ. Der Seitenkraftbeiwert HS3 steigt bis zu einem Maximalwert α_{M1} an und nimmt dann mit zunehmendem Schräglaufwinkel α deutlich ab. Der Seitenkraftbeiwert HS3 hat einen Maximalbereich M1, der ab einem Schräglaufwinkel α₃ deutlich abnimmt. Der Seitenkraftbeiwert HS4 verläuft insgesamt niedriger als der Seitenkraftbeiwert HS3, beispielsweise weil die Fahrbahn eine geringere Griffigkeit aufweist. Der Seitenkraftbeiwert HS4 steigt bis zu einem Maximalwert α_{M2} an und nimmt ab einem Schräglaufwinkel α₄ deutlich ab. Der Seitenkraftbeiwert HS4 weist zwischen den Schräglaufwinkeln α₃ und α₄ seinen Maximalbereich M2 auf.

Das ESP-Modul 59 wertet nun das beispielhaft und schematisch in Fig. 8 dargestellte µₛ-Schräglaufwinkeldiagramm zur Ermittlung der maximal einstellbaren Seitenkraft aus und stellt den Lenkwinkel δ derart ein, dass die maximalen Schräglaufwinkel α₁ oder α₂ für die Seitenkraftbeiwerte HS3 und HS4 nicht überschritten werden. Ein weiteres Einlenken der Räder 12, 13 würde nämlich keinen Effekt zeigen, da die Reibung zwischen den Rädern 12, 13 und der Fahrbahn nicht ausreicht, um die entsprechende Seitenkraft FS bereitzustellen.

Das ESP-Modul 59 geht aber noch einen Schritt weiter: Es wertet zudem den Verlauf des zugeordneten Längsreibungsbeiwerts µ_{L} der Räder 12, 13 aus, beispielsweise anhand der Verläufe HL1, HL2 gemäß Fig. 4. Zweckmäßigerweise zieht das ESP-Modul 59 ferner einen sogenannten Kammschen Kreis 65 zur Ermittlung der maximal einzustellenden Seitenkraft FS und der zugeordneten Längskraft FL heran. Der Kammsche Kreis oder Kraftschlusskreis 65 ist zudem um Seitenkraftbeiwertverläufe HS in Abhängigkeit des Schräglaufwinkels α und um Längsreibungsbeiwertverläufe HL in Abhängigkeit des Schlupfs λ erweitert, beispielsweise um die Verläufe HS3 und HL1. Das ESP-Modul 59 wertet diese Verläufe, wie oben beschrieben, zusätzlich aus. Die Verläufe HS1 bis HS4, HL1 und HL2, sowie weitere, in der Fig. 4 nicht dargestellte Verläufe sind beispielsweise im Speicher 52 abgelegt.

Das ESP-Modul 59 addiert die einzustellende Längskraft FL und Seitenkraft FS vektoriell, so dass sich beispielsweise resultierende Kräfte Fres1 und Fres2 ergeben. Zur Kompensation des Giermoments GM wäre eine Seitenkraft FS2 zweckmäßig, der ein Schräglaufwinkel α₅ zugeordnet ist. Das ESP-Modul 59 ermittelt aber anhand des Diagramms 65, dass der Seitenkraftbeiwert µₛ bei diesem Schräglaufwinkel sein Maximum bereits deutlich überschritten hat. Das ESP-Modul 59 ermittelt z.B. anhand des Seitenkraftbeiwertverlaufs HS3(α) den Schräglaufwinkel α₃ oder den Maximalwert α_{M1} als optimalen Schräglaufwinkel, die kleiner als der Schräglaufwinkel α₅ sind, so dass der Seitenkraftbeiwert µₛ den Bereich seines Maximums M1 nicht oder zumindest nicht wesentlich überschreitet. In Abhängigkeit der Seitenkraft FS1 und/oder des optimalen Schräglaufwinkels α_{M1} oder α₃ ermittelt das ESP-Modul 59 dann einen Lenkwinkel δ und übermittelt diesen im Rahmen des Lenksignals 50 an den Lenkaktor 40.

Der Lenkaktor 40 stellt anschließend die Räder 12, 13 auf den Lenkwinkel δ ein. Das Rad 12 nimmt dadurch den Lenkwinkel δ_{L}, das Rad 13 den Lenkwinkel δ_{R} ein, wobei die beiden Lenkwinkel δ_{L} und δ_{R} vorliegend in einem festen Verhältnis zueinander stehen, beispielsweise weil die Räder 12, 13 über ein Lenktrapez miteinander gekoppelt sind.

In diesem Zusammenhang sei aber betont, dass auch eine individuelle Einstellung der Lenkwinkel δ_{L} und δ_{R} durch den Lenkaktor 40 zweckmäßig einstellbar ist. Das ESP-Modul 59 ermittelt in diesem Fall beide Lenkwinkel δ_{L}, δ_{R} - vorteilhafterweise in Abhängigkeit des jeweiligen individuellen Seitenkraftbeiwerts µₛ der Räder 12, 13 in der oben erläuterten Weise.

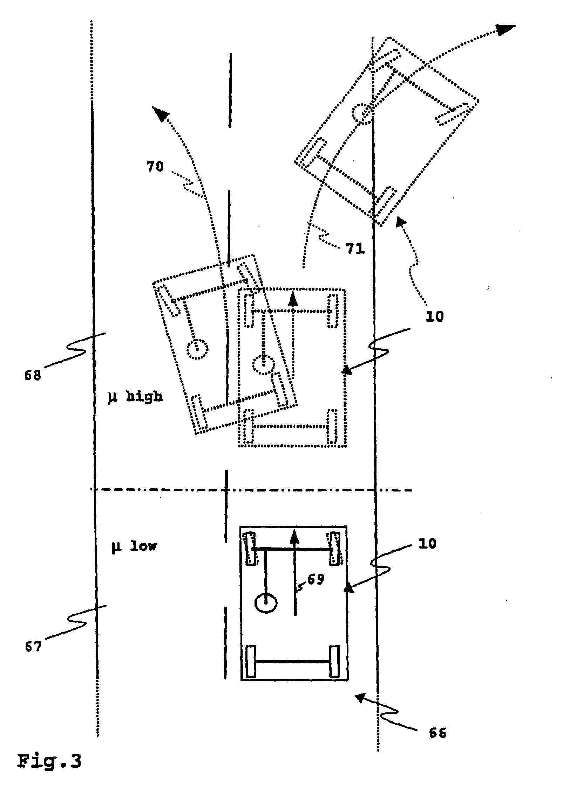

In Fig. 3 ist eine weitere Fahrsituation des Fahrzeugs 10, nämlich eine µ-Sprung-Fahrsituation dargestellt, in der sich das erfindungsgemäße ESP-Modul 59 als vorteilhaft erweist.

Das Fahrzeug 10 fährt beispielsweise von einem Fahrbahnabschnitt 67 der Fahrbahn 66 mit niedriger Reibungszahl µ (µ-low) in einen Fahrbahnabschnitt 68 mit hoher Reibungszahl p (µ-high). Beispielsweise tritt auf dem Fahrbahnabschnitt 67 Aquaplaning auf, wohingegen im Fahrbahnabschnitt 68 die Räder 12, 13 des Fahrzeugs 10 eine bessere Haftung in Bezug auf die Fahrbahn 66 aufweisen, weil beispielsweise das Wasser von der Oberfläche der Fahrbahn 66 besser abfließt. Bei einem konventionellen Fahrzeug würde der Fahrer 38 nun beispielsweise, weil die Räder 12, 13 aufschwimmen, diese in die gestrichelt gezeichnete schräge Stellung verstellen. Dennoch würde das Fahrzeug 10 in der Fahrtrichtung 69 weiterfahren, da die Räder 12, 13 keine Seitenführungskräfte auf die Fahrbahn 66 übertragen können.

Wenn das Fahrzeug 10 nun auf den Fahrbahnabschnitt 68 mit höherer Reibung gelangt, würde das Fahrzeug 10, weil die Räder 12, 13 wieder Haftung aufweisen, die Bewegungsbahn 70 durchlaufen und dabei beispielsweise auf die Gegenfahrbahn gelangen oder vollständig von der Fahrbahn 66 abkommen.

Ein erfahrener Fahrer 38 würde dieser Situation eventuell durch eine schnelle Gegenlenkreaktion begegnen und das Fahrzeug 10 nach rechts lenken. Weil die Räder 12, 13 jedoch für den Fahrer 38 eine überraschend hohe Griffigkeit aufweisen, also hohe Seitenkräfte übertragen können, "überreißt" der Fahrer 38 das Fahrzeug 10, so dass es auf der Bewegungsbahn 71 nach rechts von der Fahrbahn 66 abkommt.

Das ESP-Modul 59 verhindert jedoch die oben genannten gefährlichen Situationen und hält das Fahrzeug 10 in der gewünschten Fahrtrichtung 69. Der Fahrer 38 hält das, Lenkrad 37 zweckmäßigerweise in Geradeausstellung. Aber auch bei anderen Wunschlenkwinkeln δ_{H} lenkt das ESP-Modul 59 in dem Fahrbahnabschnitt 67, dem µ-low-Abschnitt, die Räder 12, 13 in Geradeausstellung. Das ESP-Modul 59 ermittelt nämlich in der oben beschriebenen Weise anhand der Seitenkraftbeiwerte µₛ bzw. der Längsreibungsbeiwerte µ_{L}, dass eine Seitenführungskraft zum Lenken der Räder 12, 13 in die gestrichelt eingezeichneten Stellung aufgrund der geringen Reibungszahl µ-low nicht auf die Fahrbahn 66 übertragbar wäre und stellt die Räder 12, 13 dementsprechend in Geradeausstellung oder näherungsweise in Geradeausstellung. Wenn das Fahrzeug 10 dann auf den Fahrbahnabschnitt 68 mit µ-high gelangt, ist der Lenkwinkel δ der Räder 12, 13 zumindest näherungsweise optimal, so dass das Fahrzeug 10 weiterhin, wie gemäß Fig. 3 dargestellt, geradeaus fährt. Das Fahrzeug 10 verhält sich also den Erwartungen des Fahrers entsprechend.

Bei einer Kurvenfahrt mit einer entsprechenden µ-Sprung-Fahrsituation würde das ESP-Modul 59 z.B. den Wunschlenkwinkel δ_{H}, soweit es der Seitenkraftbeiwert µₛ zulässt, an den Rädern 12, 13, zweckmäßigerweise unter Berücksichtigung der Gierrate Ψ, einstellen.

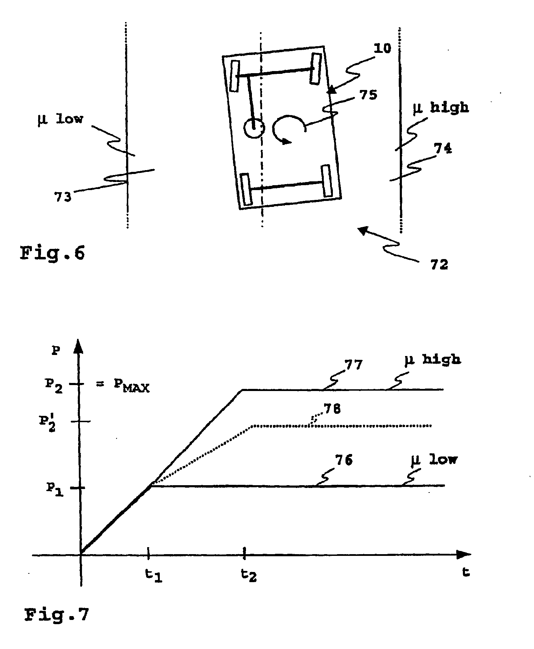

Eine in Fig. 6 dargestellte Fahrbahn 72 ist in Längsrichtung unterschiedlich griffig. Beispielsweise befinden sich die rechten Räder 13, 15 des Fahrzeugs 10 auf einem Fahrbahnabschnitt 74 mit µ-high und die linken Räder 12, 14 auf einem Fahrbahnabschnitt 73 mit µ-low. Es handelt sich also um eine sogenannte µ-Split-Fahrsituation. Das Antiblockiersystem 58 bremst nun die Räder 12, 13, 14, 15 mit Hilfe der Bremsen 17 bis 20 möglichst optimal ab, d.h. diese stellt an den Bremsen 18, 20 niedrigere Bremswerte ein als an den Bremsen 17, 19, um eine möglichst optimale Bremswirkung zu erzielen. Dies bewirkt jedoch ein Giermoment 75, das an sich zu einer unerwünschten Gierdrehung des Fahrzeugs 10 führen würde. Das ESP-Modul 59 wirkt dem Giermoment 75 prädiktiv entgegen:
Das ABS-Modul 58 erhöht beispielsweise den Bremsdruck an den Bremsen 17 bis 20 zunächst bis zu einem Wert P₁. Die Räder 12 und 14 auf dem µ-low-Fahrbahnabschnitt 74 erreichen dann bereits ihre maximale Bremsleistung. Ab diesem Zeitpunkt t₁ hält das ABS-Modul 58 den Bremswertverlauf 76 für die Bremsen 17 und 19 im Wesentlichen beim Bremswert P₁ konstant, wobei in der Praxis Regelungsschwankungen um diesen Wert vorhanden sind. Vom Zeitpunkt t₁ an bis zum Zeitpunkt t₂ erhöht das ABS-Modul 58 den Bremsdruck an den Bremsen 18 und 20 der Räder 13 und 15 weiter bis zu einem Bremswert P₂, so dass sich der Bremswertverlauf 77 einstellt. Somit bremsen auch die Räder 12 und 14 optimal. Das ABS-Modul 58 übermittelt zweckmäßigerweise die tatsächlich an den Bremsen 17 bis 20 eingestellten Bremswertverläufe 76 und 77 dem ESP-Modul 59, das anhand des Verhältnisses der Verläufe 76, 77 zueinander einen an den Rädern 12, 13 einzustellenden Lenkwinkel δ in der oben beschriebenen Weise ermittelt. Auch hierbei berücksichtigt das ESP-Modul 59 den Seitenkraftbeiwert µₛ, damit eine maximale Seitenkraft FS und somit ein maximaler Giermomentausgleich möglich ist.

Im ESP-Modul 59 ist zweckmäßigerweise das Regelungsmodell 79 des Antiblockiermoduls 58 gespeichert, so dass dieses die Bremswertverläufe 76, 77 sozusagen "vorausschauend", d.h. prädiktiv ermitteln kann, um bereits vor Entstehen eines negativen Giermoments 75 durch entsprechende Lenkwinkelkorrektur kompensierend und fahrstabilisierend eingreifen zu können.

Wenn der maximal erzielbare Seitenkraftwert FS überschritten ist, ein weiteres Gegenlenken oder eine weitere Erhöhung des Lenkwinkels δ wirkungslos wäre, übermittelt das ESP-Modul 59 zweckmäßigerweise dem ABS-Modul 58 einen Maximalwert P_{MAX}, der im vorliegenden Ausführungsbeispiel dem Wert P₂ entspricht, so dass das ABS-Modul 58 den Bremsdruck an den Bremsen 17 und 19 nicht über diesen Wert P_{MAX} hinaus erhöht. Das Fahrzeug 10 bremst somit maximal ab und bleibt dennoch in der gewünschten, durch den Fahrer 38 am Lenkrad 37 eingestellten Fahrtrichtung.

Zum Vergleich ist in Fig. 7 ein Bremswertverlauf 78 eingezeichnet, der die Bremswirkung eines konventionellen Antiblockiersystem wiedergibt. Dabei sind typische Randbedingungen vorausgesetzt, nämlich dass der Fahrer 38 eine Lenkwinkelkorrektur von maximal 120° am Lenkrad 37 einstellen kann, was einem maximalen Bremswert P'₂ entspricht, und dass der Fahrer 38 den Lenkwinkel δ maximal um 180° pro Sekunde verändern kann, so dass der Anstieg des Bremswertverlaufs 78 geringer als der des Bremswertverlaufs 77 ist. Es ist zu erkennen, dass das ABS-Modul 58 in Zusammenwirken mit dem ESP-Modul 59 schneller eine optimale Bremskraft aufbauen kann, weil das ESP-Modul 59 durch entsprechendes Gegenlenken ein resultierendes, unerwünschtes Giermoment 75 kompensiert.

Es versteht sich, dass das ESP-Modul 59 auf die erfindungsgemäße Weise die physikalischen Verhältnisse aller Räder 12, 13, 15, 16, insbesondere die jeweiligen Seitenkraftverhältnisse individuell auswerten kann. Dasselbe gilt für das ABS-Modul 58, das zweckmäßigerweise jedes Rad 12, 13, 15, 16 individuell mit maximalem Bremsdruck abbremsen kann, wobei das ESP-Modul 59 durch Lenken der Räder 12, 13 (bei Hinterradlenkung auch der Räder 15, 16) die erforderliche Giermomentkompensation durchführt.

## Patentansprüche

1. Stabilisierungsvorrichtung zur Fahrstabilisierung eines Fahrzeugs (10), mit Lenkmitteln (9) zur Beeinflussung eines Lenkwinkels (δ) gelenkter Räder (12, 13) des Fahrzeugs (10), und mit Stabilisierungsmitteln (61), die die Lenkmittel (9) zur Fahrstabilisierung des Fahrzeugs (10) steuern,
**dadurch gekennzeichnet, dass**
die Stabilisierungsmittel (61) die Lenkmittel (9) in Abhängigkeit eines Seitenkraftbeiwerts (µₛ) mindestens eines der gelenkten Räder (12, 13) zur Einstellung eines das Fahrzeug (10) stabilisierenden Lenkwinkels (δ) ansteuern, wobei die Stabilisierungsmittel. (61) einen Schräglaufwinkel (α) der gelenkten Räder (12, 13) derart einstellen, dass der Seitenkraftbeiwert (µₛ) den Bereich seines Maximums (M1, M2) im wesentlichen nicht überschreitet.

2. Stabilisierungsvorrichtung nach Anspruch 1,
**dadurch gekennzeichnet, dass**
die Stabilisierungsmittel (61) zur Ermittlung des Schräglaufwinkels (α) in Abhängigkeit eines Längsreibungsbeiwerts (µ_{L}) des mindestens einen gelenkten Rads ausgebildet sind.

3. Stabilisierungsvorrichtung nach Anspruch 1 oder 2,
**dadurch gekennzeichnet, dass**
die Stabilisierungsmittel (61) zur Ermittlung des Schräglaufwinkels (α) in Abhängigkeit eines Längsschlupfs und/oder eines Querschlupfs des mindestens einen gelenkten Rads ausgestaltet sind.

4. Stabilisierungsvorrichtung nach Anspruch 1,
**dadurch gekennzeichnet, dass**
die Stabilisierungsmittel (61) zur Ermittlung des Schräglaufwinkels (α) anhand einer vektoriellen Addition von Längskraft (FL) und Seitenkraft (FS) mindestens eines gelenkten Rads in der Art des Kammschen Kreises (80) ausgebildet sind, um einen Maximalbereich der erzielbaren Längskraft (FL) und Seitenkraft (FS) zu ermitteln.

5. Stabilisierungsvorrichtung nach Anspruch 4,
**dadurch gekennzeichnet, dass**
die Stabilisierungsmittel (61) bei der vektoriellen Addition der Längskraft (FL) und der Seitenkraft (FS) den der Längskraft (FL) zugeordneten Längsreibungsbeiwert (µ_{L}) und den der Seitenkraft (FS) zugeordneten Seitenkraftbeiwert (µₛ) auswerten.

6. Stabilisierungsvorrichtung nach Anspruch 1,
**dadurch gekennzeichnet, dass**
die Stabilisierungsmittel (61) bei einem Übersteuern des Fahrzeugs (10) zur Ansteuerung der Lenkmittel (9) zu einem Gegenlenken in Richtung eines Untersteuerns des Fahrzeugs (10) ausgebildet sind und/oder bei einem Untersteuern des Fahrzeugs (10) zur Ansteuerung der Lenkmittel (9) zu einem Gegenlenken in Richtung eines Übersteuerns des Fahrzeugs (10) ausgebildet sind.

7. Stabilisierungsvorrichtung nach Anspruch 1,
**dadurch gekennzeichnet, dass**
die Stabilisierungsmittel (61) zum Bewirken eines Übersteuerns des Fahrzeugs (10) durch Abbremsen mindestens eines Rads des Fahrzeugs (10) ausgebildet sind, um dann die Lenkmittel (9) in Richtung eines Untersteuerns des Fahrzeugs (10) ansteuern.

8. Stabilisierungsvorrichtung nach Anspruch 1,
**dadurch gekennzeichnet, dass**
die Stabilisierungsmittel (61) zur Zusammenwirkung mit einer Antiblockierregelung (58) des Fahrzeugs (10) ausgebildet sind oder eine Antiblockierregelung (58) aufweisen.

9. Stabilisierungsvorrichtung nach Anspruch 8,
**dadurch gekennzeichnet, dass**
die Stabilisierungsmittel (61) zur Auswertung von durch die Antiblockierregelung (58) ermittelten und/oder eingestellten Bremswerten (P), insbesondere von Druckwerten zur Druckbeaufschlagung der Bremsen, ausgebildet sind.

10. Stabilisierungsvorrichtung nach Anspruch 1,
**dadurch gekennzeichnet, dass**
die Stabilisierungsmittel (61) zur Auswertung einer Relation mindestens zweier an Rädern (12, 13) einer Achse in Abhängigkeit eines Reibwerts des jeweiligen Rads eingestellten Bremswerten (P) ausgebildet sind.

11. Stabilisierungsvorrichtung nach Anspruch 1,
**dadurch gekennzeichnet, dass**
die Stabilisierungsmittel (61) den Lenkwinkel (δ) anhand eines Bremswertverlaufs (76, 77) eines Rads (13) mit höherem Reibungsbeiwert im Verhältnis zu einem Rad (12) mit einem niedrigeren Reibungsbeiwert ermitteln.

12. Stabilisierungsvorrichtung nach wenigstens einem der Ansprüche 8 bis 11,
**dadurch gekennzeichnet, dass**
die Stabilisierungsmittel (61) zur Ausgabe eines Begrenzungswerts für einen an einem Rad maximal einzustellenden Bremswert (P_{MAX}) an die Antiblockierregelung (58) ausgebildet sind.

13. Stabilisierungsvorrichtung nach Anspruch 12,
**dadurch gekennzeichnet, dass**
die Stabilisierungsmittel (61) den Begrenzungswert in Abhängigkeit des Seitenkraftbeiwerts (µₛ) und/oder des Schräglaufwinkels (α) mindestens eines der gelenkten Räder (12, 13) ermitteln.

14. Stabilisierungsvorrichtung nach Anspruch 1,
**dadurch gekennzeichnet, dass**
die Stabilisierungsmittel (61) zur Auswertung eines an einer Lenkhandhabe des Fahrzeugs (10) vorgegebenen Lenkwinkels (δ) und/oder eines Gierwerts des Fahrzeugs (10) und/oder von Drehzahlwerten der Räder (12, 13) des Fahrzeugs (10) und/oder eines Längsgeschwindigkeitswerts und/oder eines Schwimmwinkels des Fahrzeugs (10) ausgebildet sind.

15. Stabilisierungsvorrichtung nach Anspruch 1,
**dadurch gekennzeichnet, dass**
diese einen durch einen Prozessor ausführbaren Programmcode aufweist.

16. Speichermittel mit einer Stabilisierungsvorrichtung nach Anspruch 15.

17. Verfahren zur Fahrstabilisierung eines Fahrzeugs (10), bei dem die folgenden Schritte durchgeführt werden:
- Beeinflussung eines Lenkwinkels (δ) gelenkter Räder (12, 13) des Fahrzeugs (10) anhand elektrisch und/oder optisch ansteuerbarer Lenkmittel (9),
- Fahrstabilisierung des Fahrzeugs (10) durch Stabilisierungsmittel (61), die die Lenkmittel (9) steuern, **gekennzeichnet durch**
- Ermitteln mindestens eines Seitenkraftbeiwerts (µₛ) der gelenkten Räder (12, 13),
- Ansteuern der Lenkmittel (9) in Abhängigkeit des mindestens einen Seitenkraftbeiwerts (µₛ) zur Einstellung eines das Fahrzeug (10) stabilisierenden Lenkwinkels (δ) **durch** die Stabilisierungsmittel (61), wobei die Stabilisierungsmittel (61) einen Schräglaufwinkel (α) der gelenkten Räder (12, 13) derart einstellen, dass der Seitenkraftbeiwert (µₛ) den Bereich seines Maximums (M1, M2) im wesentlichen nicht überschreitet.

18. Fahrzeug, insbesondere Personenkraftwagen,
**dadurch gekennzeichnet, dass**
dieses eine Stabilisierungsvorrichtung (25) nach einem der Ansprüche 1 bis 15 und/oder ein Speichermittel nach Anspruch 16 und/oder Mittel zur Durchführung des Verfahrens nach Anspruch 17 aufweist.

## Claims

1. A stabilizing system for directionally stabilizing a vehicle (10), having a steering means (9) for influencing a steering angle (δ) of steered wheels (12, 13) of the vehicle (10), and having stabilizing means (61) which control the steering means (9) in order to directionally stabilize the vehicle (10), **characterized in that** the stabilizing means (61) actuate the steering means (9) as a function of a lateral force coefficient (µₛ) of at least one of the steered wheels (12, 13) in order to set a steering angle which stabilizes the vehicle, with the stabilizing means (61) setting a slip angle (α) of the steered wheels (12, 13) in such a way that the lateral force coefficient (µₛ) essentially does not exceed the region of its maximum value (M1, M2).

2. The stabilizing system as claimed in claim 1, **characterized in that** the stabilizing means (61) are designed to determine the slip angle (α) as a function of a longitudinal friction coefficient (µ_{L}) of the at least one steered wheel.

3. The stabilizing system as claimed in claim 1 or 2, **characterized in that** the stabilizing means (61) are configured to determine the slip angle (α) as a function of a longitudinal slip and/or of a transverse slip of the at least one steered wheel.

4. The stabilizing system as claimed in claim 1, **characterized in that** the stabilizing means (61) are designed to determine the slip angle (α) by reference to a vectorial addition of the longitudinal force (FL) and lateral force (FS) of at least one steered wheel in the manner of Kamm's circle (80) in order to determine a maximum range of the achievable longitudinal force (FL) and lateral force (FS).

5. The stabilizing system as claimed in claim 4, **characterized in that** during the vectorial addition of the longitudinal force (FL) and the lateral force (FS) the stabilizing means (61) evaluate the longitudinal friction coefficient (µ_{L}) which is assigned to the longitudinal force (FL) and the lateral force coefficient (µₛ) which is assigned to the lateral force (FS).

6. The stabilizing system as claimed in claim 1, **characterized in that** when the vehicle (10) is over-steered the stabilizing means (61) are designed to actuate the steering means (9) to countersteer in the direction of understeering of the vehicle (10) and/or when the vehicle (10) is understeered the stabilizing means (61) are designed to actuate the steering means (9) to countersteer in the direction of oversteering the vehicle (10).

7. The stabilizing system as claimed in claim 1, **characterized in that** the stabilizing means (61) are designed to bring about oversteering of the vehicle (10) by braking at least one wheel of the vehicle (10) in order then to actuate the steering means (9) in the direction of understeering of the vehicle (10).

8. The stabilizing system as claimed in claim 1, **characterized in that** the stabilizing means (61) are designed to interact with an antilock brake control system (58) of the vehicle (10) or have an antilock brake control system (58).

9. The stabilizing system as claimed in claim 8, **characterized in that** the stabilizing means (61) are designed to evaluate braking values (P), in particular pressure values for applying pressure to the brakes, said braking values (P) being determined and/or set by means of the antilock brake control system (58).

10. The stabilizing system as claimed in claim 1, **characterized in that** the stabilizing means (61) are designed to evaluate a relationship between at least two braking values (P) which are set at wheels (12, 13) of an axle as a function of a coefficient of friction of the respective wheel.

11. The stabilizing system as claimed in claim 1, **characterized in that** the stabilizing means (61) determine the steering angle (δ) by reference to a braking value profile (76, 77) of a wheel (13) with a relatively high coefficient of friction compared to a wheel (12) with a relative low coefficient of friction.

12. The stabilizing system as claimed in at least one of claims 8 to 11, **characterized in that** the stabilizing means (61) are designed to output to the antilock brake control system (58) a limiting value for a maximum braking value (P_{MAX}) to be set at a wheel.

13. The stabilizing system as claimed in claim 12, **characterized in that** the stabilizing means (61) determine the limiting value as a function of the lateral force coefficient (µₛ) and/or the slip angle (α) of at least one of the steered wheels (12, 13).

14. The stabilizing system as claimed in claim 1, **characterized in that** the stabilizing means (61) are designed to evaluate a steering angle (δ) which is predefined at a steering handle of the vehicle (10) and/or a yaw value of the vehicle (10) and/or rotational speed values of the wheels (12, 13) of the vehicle (10) and/or a longitudinal speed value and/or an attitude angle of the vehicle (10).

15. The stabilizing system as claimed in claim 1, **characterized in that** the latter has a program code which can be executed by a processor.

16. A storage means having a stabilizing system as claimed in claim 15.

17. A method for directionally stabilizing a vehicle (10), in which the following steps are carried out:
- a steering angle (δ) of steered wheels (12, 13) of the vehicle (10) is influenced by means of steering means (9) which can be actuated electrically and/or optically,
- the vehicle (10) is stabilized directionally by stabilizing means (61) which control the steering means (9), **characterized by**
- determination of at least one lateral force coefficient (µₛ) of the steered wheels (12, 13),
- actuation of the steering means (9) as a function of the at least one lateral force coefficient (µₛ) in order to set, using the stabilizing means (61), a steering angle (δ) which stabilizes the vehicle (10), wherein the stabilizing means (61) set a slip angle (α) of the steered wheels (12, 13) in such a way that the lateral force coefficient (µₛ) essentially does not exceed the region of its maximum value (M1, M2).

18. A vehicle, in particular passenger car, **characterized in that** the latter has a stabilizing system (25) as claimed in one of claims 1 to 15 and/or a storage means as claimed in claim 16 and/or means for carrying out the method as claimed in claim 17.

## Revendications

1. Système de stabilisation pour la stabilisation directionnelle d'un véhicule, comprenant des moyens de braquage (9) afin de prendre de l'influence sur un angle de braquage (δ) des roues dirigées (12, 13) du véhicule, et des moyens de stabilisation (61) commandant lesdits moyens de braquage (9) pour la stabilisation directionnelle du véhicule (10),
**caractérisé en ce**
**que** lesdits moyens de stabilisation (61) commandent lesdits moyens de braquage (9) en fonction d'un coefficient de force latérale (µₛ) d'au moins un desdites roues dirigées (12, 13) pour le réglage d'un angle de braquage (δ) stabilisant le véhicule (10), auxdits moyens de stabilisation (61) réglant un angle de dérive (α) desdites roues dirigées (12, 13) d'une telle façon, que ledit coefficient de force latérale (µₛ) ne dépasse pas la gamme de son maximum (M1, M2) par une valeur essentielle.

2. Système de stabilisation selon la revendication 1,
**caractérisé en ce**
**que** lesdits moyens de stabilisation (61) sont configurés pour la détermination dudit angle de dérive (α) en fonction d'un coefficient de frottement longitudinal (µ_{L}) de ladite au moins une roue dirigée.

3. Système de stabilisation selon la revendication 1 ou 2,
**caractérisé en ce**
**que** lesdits moyens de stabilisation (61) sont configurés pour la détermination dudit angle de dérive (α) en fonction d'un patinage longitudinal et/ou d'un patinage transversal de ladite au moins une roue dirigée.

4. Système de stabilisation selon la revendication 1,
**caractérisé en ce**
**que** lesdits moyens de stabilisation (61) pour la détermination dudit angle de dérive (α) sont configurés à l'aide d'une addition vectorielle de la force longitudinale (FL) et de la force latérale (FS) d'au moins une roue dirigée de la manière d'un cercle de Kamm (80) afin de déterminer une gamme maximale de la force longitudinale (FL) et de la force latérale (FS) achevables.

5. Système de stabilisation selon la revendication 4,
**caractérisé en ce**
**qu'**au cas de l'addition vectorielle de la force longitudinale (FL) et de la force transversale (FS), lesdits moyens de stabilisation (61) évaluent le coefficient de frottement longitudinal (µ_{L}), qui est affecté à la force longitudinale (FL), et le coefficient de la force latérale (µₛ), qui est affecté à la force latérale (FS).

6. Système de stabilisation selon la revendication 1,
**caractérisé en ce**
**qu'**au cas de survirage dudit véhicule (10), lesdits moyens de stabilisation (61) sont configurés pour la commande desdits moyens de braquage (9) pour un braquage en opposition en la direction d'un sous-virage dudit véhicule (10) et/ou, au cas d'un sous-virage dudit véhicule (10), sont configurés pour la commande desdits moyens de braquage (9) pour un braquage en opposition en la direction d'un survirage dudit véhicule (10).

7. Système de stabilisation selon la revendication 1,
**caractérisé en ce**
**que** lesdits moyens de stabilisation (61) sont configurés d'une telle façon, qu'ils induisent un survirage dudit véhicule (10) par freinage d'au moins une roue dudit véhicule (10) et ensuite par commande desdits moyens de braquage (9) en une direction d'un sous-virage dudit véhicule (10).

8. Système de stabilisation selon la revendication 1,
**caractérisé en ce**
**que** lesdits moyens de stabilisation (61) sont configurés pour l'interaction avec un système de réglage d'antiblocage (58) dudit véhicule (10) ou comprennent un système de réglage d'antiblocage (58).

9. Système de stabilisation selon la revendication 8,
**caractérisé en ce**
**que** lesdits moyens de stabilisation (61) sont configurés pour l'évaluation des valeurs de freinage (P) déterminées et/ou ajustées par ledit système de réglage d'antiblocage (58), en particulier des valeurs de pression pour la pressurisation des freins.

10. Système de stabilisation selon la revendication 1,
**caractérisé en ce**
**que** lesdits moyens de stabilisation (61) sont configurés pour l'évaluation d'une corrélation entre au moins deux valeurs de freinage (P) ajustés aux roues (12, 13) d'un essieu en fonction d'une valeur de frottement de la roue respective.

11. Système de stabilisation selon la revendication 1,
**caractérisé en ce**
**que** lesdits moyens de stabilisation (61) déterminent l'angle de braquage (δ) à l'aide de la loi de la valeur de freinage (76, 77) en fonction du temps d'une roue (13) à un coefficient de frottement élevé, par rapport à une roue (12) à un coefficient de frottement inférieur.

12. Système de stabilisation selon au moins une des revendications 8 à 11,
**caractérisé en ce**
**que** lesdits moyens de stabilisation (61) sont configurés d'une telle manière, qu'ils sortent, audit système de réglage d'antiblocage (58), un coefficient de limitation pour une valeur de freinage maximale (Pₘₐₓ) à ajuster à une roue.

13. Système de stabilisation selon la revendication 12,
**caractérisé en ce**
**que** lesdits moyens de stabilisation (61) déterminent ladite valeur de limitation en fonction dudit coefficient de force latérale (µₛ) et/ou dudit angle de dérive (α) d'au moins une des roues dirigées (12, 13).

14. Système de stabilisation selon la revendication 1,
**caractérisé en ce**
**que** lesdits moyens de stabilisation sont configurés pour l'évaluation d'un angle de braquage (δ) prédéterminé à une manette de direction dudit véhicule (10) et/ou d'une valeur de lacet dudit véhicule (10) et/ou des valeurs de nombre de tours desdites roues (12, 13) dudit véhicule (10) et/ou d'une valeur de la vitesse longitudinale et/ou d'un angle de flottaison dudit véhicule (10).

15. Système de stabilisation selon la revendication 1,
**caractérisé en ce**
**qu'**il comprend un code de programme apte à être exécuté moyennant un processeur.

16. Moyens de mémorisation à un système de stabilisation selon la revendication 15.

17. Procédé de stabilisation directionnelle d'un véhicule (10), au cours duquel les étapes suivantes sont réalisées :
- intervention sur un angle de braquage (δ) des roues dirigées (12, 13) dudit véhicule (10) moyennant des moyens de braquage (9) commandables par voie électrique et/ou optique,
- stabilisation directionnelle dudit véhicule (10) moyennant des moyens de stabilisation (61), qui commandent lesdits moyens de braquage (9),
**caractérisé par**
- la détermination d'au moins un coefficient de force latérale (µ_{S}) desdites roues dirigées (12, 13),
- commande desdites moyens de braquage (9) en fonction dudit au moins un coefficient de force latérale (µₛ) pour l'ajustage d'un angle de braquage (δ) stabilisant ledit véhicule (10) moyennant lesdits moyens de stabilisation (61), auxdits moyens de stabilisation (61) ajustant un angle de dérive (α) desdites roues dirigées (12, 13) d'une telle façon, que le coefficient de force latérale (µₛ) ne dépasse pas la gamme de son maximum (M1, M2) par une valeur essentielle.

18. Véhicule, en particulier une voiture particulière,
**caractérisé en ce**
**qu'**il comprend un système de stabilisation (25) selon une quelconque des revendications 1 à 15 et/ou un moyen de mémorisation selon la revendication 16 et/ou des moyens à réaliser le procédé selon la revendication 17.
